# EUROPEAN PATENT APPLICATION

(11) **EP 1 914 794 A1**
(43) Date of publication of application: **23.04.2008**
(21) Application number: 06782414.4
(22) Date of filing: 07.08.2006
(51) Int. Cl.: H01L 21/268, G02B 7/28, G03F 7/20, H01L 21/027, H01L 21/20

(54) **LASER PROJECTION DEVICE**

(30) Priority: 08.08.2005 JP 2005229029
(71) Applicant: THE JAPAN STEEL WORKS, LTD., Tokyo 100-0006 (JP)
(72) Inventor: INAMI, Toshio, Yokohama-shi Kanagawa, 236-0004 (JP); OHTA, Kazunori, Yokohama-shi Kanagawa, 236-0004 (JP); KURATA, Yasuhide, Yokohama-shi Kanagawa, 236-0004 (JP); SHIDA, Junichi, Yokohama-shi Kanagawa, 236-0004 (JP)
(74) Representative: Leinweber & Zimmermann
(86) International application number: PCT/JP2006/315572
(87) International publication number: WO 2007/018167

(57) **Abstract**

A mask distance a is adjusted with magnification control unit and mask-shift servo-control unit, and a base plate distance b is adjusted with focus control unit, AFC control unit and table-shift servo-control unit, so that a/b is kept constant, and 1/f = 1/a + 1/b is satisfied. Even when a focal distance of projection lens fluctuates from temperature change of projection lens due to laser beams, projection magnification is able to be kept constant and focusing is precisely carried out upon imaging mask on the base. The invention is usable for ELA (excimer laser anneal) apparatus of SLS (Sequential Lateral Solidification) type.

## Description

### Field of the Invention

The present invention relates to a laser projection system, and more particularly, to a laser projection system that even when a focal distance of a projection lens changes due to fluctuation of temperatures of the projection lens caused by laser beams, magnification of projection is kept constant and focusing is precisely performed upon mask's being imaged on a base.

### Background of the Invention

Hitherto known in the art of a projection and exposure system in which an optical image of mask is projected on a base by a projection lens is such technology that a projection lens is shifted in positions to adjust projection magnification and the base is adjusted of its positions in order to carry out focusing (for example, see Patent Document 1).
Meanwhile, in an image reader system which reads a film to obtain an image data, such technology has been known that a shooting lens is shifted in positions corresponding to its temperatures in order to correct fluctuation of magnification of the shooting (see Patent Document 2).
Moreover, in an image reader system which reads a film to obtain an image data, such technology has been known that an image data is analyzed to detect fluctuation of magnification of the shooting and change magnification of the shooting with respect to the image data so as to correct fluctuation of magnification of the shooting (see Patent Document 3).
Patent Documents
1. Japanese Unexamined Patent Application 2004-29234
2. Japanese Unexamined Patent Application HEI9-152540
.3Japanese Unexamined Patent Application 2005-198091

### Detailed Description of the Invention

### Problems the Invention to solve

A laser projection system, which projects on a base through a projection lens an optical image of mask provided by laser beams of high output, has such problem that temperatures of projection lens fluctuates due to laser beams, a focal distance of projection lens fluctuates, and projection magnification fluctuates.
However, the conventional projection and exposure system has a problem that the conventional system does not consider fluctuation of projection magnification of projection lens due to its temperatures fluctuation.
Moreover, the technology of correcting magnification of the shooting in the conventional image reader system has a problem that this correcting technology is not usable for correcting the projection magnification in the laser projection system.
Thus, an object of the present invention is to provide a laser projection system that even when a focal distance of a projection lens changes due to fluctuation of temperatures of the projection lens caused by laser beams, magnification of projection is kept constant and focusing is precisely performed upon mask's being imaged on a base.

### Means for solving the problems

From a first viewpoint the present invention provides a laser projection system comprising: a laser beam source to emit laser beams; an imaging unit to image on a base through a projection lens an image of mask provided by the laser beams; and an imaging control unit which adjusts both of a mask distance a between the mask and the projection lens and a base distance b between the projection lens and the base and keeps a/b constant and performs focusing.
In case that a focal distance of the projection lens is f, projection magnification M_{fb} is M_{fb} = a/b. And a condition for the focusing is 1/f = 1/a+1/b.
Thus, the above-said laser projection system from the first viewpoint adjusts both of the mask distance a and the base distance b to keep constant M_{fb} = a/b and satisfy 1/f = 1/a+1/b for precisely focusing. By this, even when a focal distance f of a projection lens changes due to fluctuation of temperatures of the projection lens caused by laser beams, magnification of projection M_{fb} is kept constant and focusing is precisely performed upon mask's being imaged on a base.

From a second viewpoint the present invention provides a laser projection system on the basis of the laser projection system having the foregoing structure wherein the imaging control unit is provided with a mask distance adjusting means, which adjusts the mask distance a to make constant said a/b, and a base distance adjusting means which adjusts the base distance b to perform focusing.
In the laser projection system from the above-said second viewpoint, the mask distance adjusting means adjusts a mask distance a in order to keep constant M_{fb} = a/b. And the base distance adjusting means adjusts a base distance b in order to satisfy 1/f = 1/a+1/b. Those two adjusting means cooperate so that even when a focal distance f of a projection lens changes due to fluctuation of temperatures of the projection lens caused by laser beams, magnification of projection M_{fb} is kept constant and focusing is precisely performed upon mask's being imaged on a base.

From a third viewpoint, the present invention provides a laser projection system on the basis of the laser projection system having the foregoing structure wherein the mask distance adjusting means is provided with: a means for obtaining an existing projection magnification M_{fb} = a/b from an existing mask distance a and an existing base distance b; a means for obtaining a target mask distance aₛₚ from deviation between said existing projection magnification M_{fb} and a target projection magnification Mₛₚ; a means for obtaining a mask distance amendment amount Δa by multiplying an adjustment amount Δb of the base distance b obtained with the base distance adjusting means by the target projection magnification Mₛₚ; a means for obtaining an amended target mask distance Aₛₚ from the target mask distance aₛₚ and the mask distance amendment amount Δa; and a means for adjusting the mask distance a by using the amended target mask distance Aₛₚ as a command value.
For keeping constant the projection magnification M_{fb} and precisely focusing, both of the mask distance a and the base distance b are to be changed. When the mask distance a is changed, the base distance b is also to be changed accordingly. And when the base distance b is changed, the mask distance a is also to be changed accordingly. Thus, it takes time for settling.
Thus, the laser projection system from the third viewpoint adopts feed-forward control that the target mask distance aₛₚ is amended with the mask distance amendment amount Δa. By this, time needed for convergence is able to be shortened.
The base distance adjusting means for adjusting the base distance for focusing may employ an automatic focusing apparatus (for example, TTL monitor in type of secondary imaging phase difference detection) hitherto known.

### Effects of the Invention

According to the laser projection system of the present invention, even when a focal distance of a projection lens changes due to fluctuation of temperatures of the projection lens caused by laser beams, magnification of projection is kept constant and focusing is precisely performed upon mask's being imaged on a base. Most preferable embodiments using the Invention

Next, the present invention will be further detailed with referring to the examples of embodiments shown in the attached drawing. This explanation is given merely for convenience of understanding and does not mean at all that the present invention is limited to them.

### Example 1

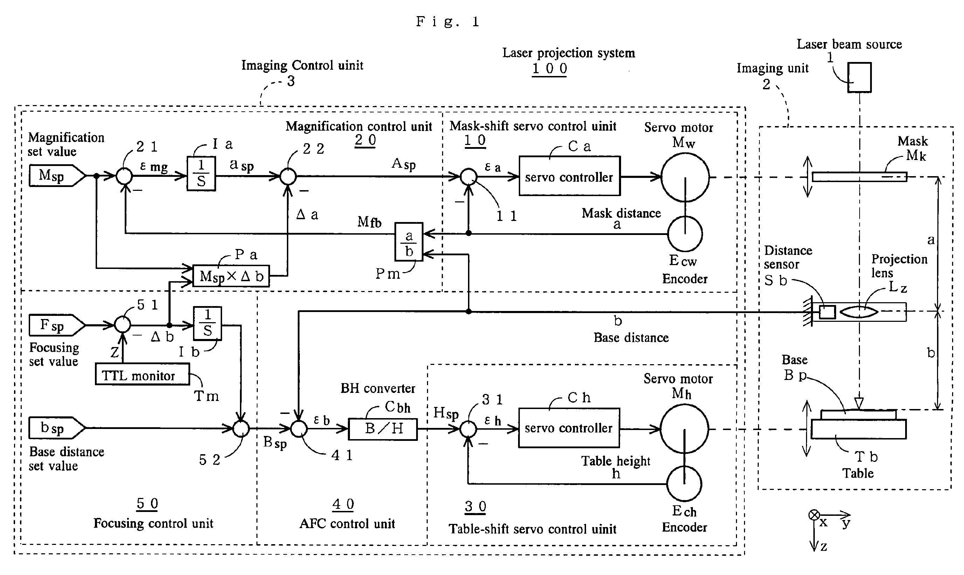

Fig. 1 is an explanatory view of structure showing a laser projection system 100 related to Example 1. The laser projection system 100 comprises a laser beam source 1 which emits laser beams of high output, an imaging unit 2 which images an optical image of mask Mk on a base Bp through a projection lens Lz, and an imaging control unit 3 which performs control for keeping constant the projection magnification and control for focusing.

The imaging unit 2 is provided with a mask Mk, a projection lens Lz, a table Tb on which a base Bp of an object to be worked is mounted, and a distance sensor Sb which measures the base distance b between the projection lens Lz and the surface of the base Bp. The whole of the imaging unit 2 is shifted in two directions (x, and y) extending perpendicularly to the direction (z) of light axis of laser beams so as to realize two dimensional scanning.
The mask Mk is able to shift in the direction z to change the mask *distance* a between the projection lens Lz and the mask Mk.
The table Tb is also able to shift in the direction z to change the base distance b.

The imaging control unit 3 is provided with: a mask-shift servo control unit 10 for shifting the mask Mk in the direction z; a magnification control unit 20 which gives an amended target mask distance Aₛₚ to the mask-shift servo control unit 10; a table-shift servo control unit 30 which shifts the table Tb in the direction z; an AFC control unit 40 which gives a target height H to the table-shift servo control unit 30; and a focusing control unit 50 which gives an amended target base distance Bₛₚ to the AFC control unit 40.

In the mask-shift servo control unit 10, an encoder E_{cw} detects a mask distance a, a difference device 11 outputs deviation εa between the mask distance a and the amended target mask distance Aₛₚ, and a servo controller Ca drives a servo motor Mw to shift the mask Mk in the direction z in order to lessen the deviation εa.

In the table-shift servo control unit 30, the encoder E_{ch} detects a table height h, a difference device 31 outputs deviation εh between the table height h and a target table height hₛₚ, and a servo controller Ch drives a servo motor Mw to shift the table Tb in the direction z in order to lessen the deviation εa.

In the AFC control unit 40, a difference device 41 outputs deviation εb between a base distance b detected by the distance sensor Sb and an amended target base distance Bₛₚ, and a BH converter C_{bh} converts the deviation εb into a target table height Hₛₚ.

A TTL monitor Tm in the focusing unit 50 outputs Z = Zo when b = bo, Z<Zo when b< bo, and Z > Zo when b > bo wherein the table distance is bo upon focusing. Deviation between Z and Zo is substantially equal to that between b and bo.
In the focusing control unit 50, a difference device 51 outputs deviation Δb between a focusing set value Fₛₚ and TTL signal Z, an integrator Ib works time quadrature of deviation Δb, and an adder 52 adds an integrated value of the deviation Δb to a base distance set value bₛₚ to output an amended target base distance Bₛₚ.

In the magnification control unit 20, a division device Pm divides a mask distance a obtained by an encoder E_{cw} with a base distance b obtained by the distance sensor Sb to obtain an existing magnification M_{fb}, a deduction device 21 outputs deviation ε_{mg} between the existing magnification M_{fb} and a magnification set value Mₛₚ, and the integrator Ia works time quadrature of deviation ε_{mg} to obtain a target mask distance aₛₚ. Meanwhile, a multiplication device Pa multiplies the deviation Δb by a magnification set value Mₛₚ to obtain a mask distance amendment amount Δa. And a deduction device 22 deducts the mask distance amendment amount Δa from the target mask distance aₛₚ to output an amended target mask distance Aₛₚ.

According to the laser projection system 100 of Example 1, even when a focal distance of the projection lens Lz changes due to fluctuation of temperatures of the projection lens Lz caused by laser beams of high output, magnification of projection is kept constant and focusing is precisely performed upon mask Mk's being imaged on the base Bp. Moreover, the feed-forward control which corrects the target mask distance aₛₚ with the mask distance amendment amount Δa enables time required for convergence to be made shorter. Possibilities of Industrial Utilization

The laser projection system according to the present invention may be usable, for example, in an ELA (excimer laser anneal) apparatus of SLS (Sequential Lateral Solidification) type. Detailed description of drawing(s)

Fig. 1 is an explanatory view of structure showing a laser projection system related to Example 1.

### Description of Reference Numerals

- 1: Laser beams source
- 2: Imaging unit
- 3: Imaging control unit
- 10: Mask-shift servo control unit
- 20: Magnification control unit
- 30: Table-shift servo control unit
- 40: AFC control unit
- 50: Focusing control unit
- 100: Laser projection system
- Bp: Base
- Lz: Projection lens
- Mk: Mask
- Tb: Table

## Claims

1. A laser projection system comprising:
a laser beam source to emit laser beams; an imaging unit to image on a base plate through a projection lens an image of mask provided by the laser beams; and an imaging control unit which adjusts both of a mask distance a between the mask and the projection lens and a base distance b between the projection lens and the base and keeps a/b constant and performs focusing.

2. A laser projection system as set forth in Claim 1 wherein the imaging control unit is provided with a mask distance adjusting means, which adjusts the mask distance a to make constant said a/b, and a base distance adjusting means which adjusts the base distance b to perform focusing.

3. A laser projection system as set forth in Claim 2 wherein the mask distance adjusting means is provided with: a means for obtaining an existing projection magnification M_{fb} = a/b from an existing mask distance a and an existing base distance b; a means for obtaining a target mask distance aₛₚ from deviation between said existing projection magnification M_{fb} and a target projection magnification Mₛₚ; a means for obtaining a mask distance amendment amount Δa by multiplying an adjustment amount Δb of the base distance b obtained with the base distance adjusting means by the target projection magnification Mₛₚ; a means for obtaining an amended target mask distance Aₛₚ from the target mask distance aₛₚ and the mask distance amendment amount Δa; and a means for adjusting the mask distance a by using the amended target mask distance Aₛₚ as a command value.
